# FASCICULE DE BREVET EUROPEEN

(11) **EP 1 123 858 B1**
(45) Date de publication et mention de la délivrance du brevet: **06.04.2005**
(21) Numéro de dépôt: 01400261.2
(22) Date de dépôt: 02.02.2001
(51) Int. Cl.: B62D 65/00

(54) **Dispositif pour placer une pièce fortement bombée dans une position prédéterminée, et procédé appliqué à ce dispositif**
Einrichtung für die Positionierung eines stark gewölbten Teiles in einer vorbestimmten Stellung und Verfahren angewendet auf diese Einrichtung
Device for placing in a predetermined position a highly convex component and method applied to this device

(30) Priorité: 09.02.2000 FR 0001590
(43) Date de publication de la demande: 16.08.2001
(73) Titulaire: Renault s.a.s., 92100 Boulogne Billancourt (FR)
(72) Inventeur: Ollivon, Lionel, 78500 Sartrouville (FR)

(56) Documents cités:
- US-A- 3 620 524
- PATENT ABSTRACTS OF JAPAN vol. 011, no. 076 (M-569), 7 mars 1987 (1987-03-07) & JP 61 232970 A (NISSAN MOTOR CO LTD), 17 octobre 1986 (1986-10-17)

## Description

La présente invention se rapporte à un dispositif pour placer une pièce fortement bombée telle qu'une vitre panoramique de véhicule automobile dans une position prédéterminée, et à un procédé appliqué à ce dispositif.

Dans certaines industries, il convient de pouvoir placer une pièce dans une position prédéterminée avec un degré élevé de précision, en vue de la préhension ultérieure de cette pièce par des moyens de montage tels qu'un robot.

C'est le cas notamment dans le domaine de l'industrie automobile, et en particulier lorsqu'il s'agit de monter des vitres sur un véhicule automobile.

La précision avec laquelle les vitres sont positionnées préalablement à leur préhension par des moyens de montage est déterminante tant pour la répétabilité des opérations de montage que pour leur qualité.

Pour obtenir le degré de précision souhaité, il est connu de poser les vitres sur des surfaces horizontales, puis de les centrer au moyen de galets qui viennent serrer leur périphérie, voir à cet effet le document US-A-3 620 524.

Cette technique permet d'atteindre d'excellents résultats lorsque les vitres sont faiblement bombées.

Cependant, cette technique devient inadaptée dès que les vitres sont fortement bombées (vitres dites « panoramiques »), ce qui est tout à fait dommageable étant donnée la tendance actuelle à concevoir des véhicules automobiles dont les vitres définissent des surfaces de plus en plus gauches.

On a pu constater en effet que le serrage par les galets de centrage avait pour effet de déformer certaines parties de ces vitres, au risque de grever la précision souhaitée voire d'entraîner de la casse.

La présente invention a pour but de fournir un dispositif permettant de supprimer ces inconvénients.

On atteint ce but de l'invention avec un dispositif pour placer une pièce fortement bombée telle qu'une vitre panoramique de véhicule automobile dans une position prédéterminée, remarquable en ce qu'il comprend une table inclinée par rapport à l'horizontale comportant :
- des moyens pour permettre à ladite pièce de glisser parallèlement à ladite table,
- des moyens pour recevoir ladite pièce lorsqu'elle descend le long de ladite table,
- des moyens pour déplacer ladite pièce sur ladite table jusqu'à ladite position prédéterminée en la faisant glisser sur lesdits moyens de réception, et
- des moyens pour immobiliser ladite pièce dans ladite position prédéterminée.

Grâce à ces caractéristiques, on obtient un dispositif permettant d'amener la pièce fortement bombée vers la position prédéterminée souhaitée en la faisant glisser et sans lui imposer de contrainte excessive, ce qui permet d'atteindre la précision recherchée et de prévenir tout risque de casse.

Suivant d'autres caractéristiques du dispositif selon l'invention :
- lesdits moyens de glissement comprennent un premier rouleau monté pivotant et glissant sur un premier axe sensiblement parallèle à la direction de plus grande pente de ladite table et des deuxième et troisième rouleaux montés pivotants et glissants respectivement sur des deuxième et troisième axes sensiblement perpendiculaires à ladite direction,
- lesdits moyens de réception comprennent deux potences s'étendant dans des plans sensiblement perpendiculaires à ladite table, chacune de ces potences supportant de moyens de roulement destinés à coopérer avec ladite pièce,
- lesdits moyens de déplacement comprennent une pince articulée sur ladite table,
- lesdits moyens d'immobilisation comprennent deux moyens de ventouse fixes par rapport à ladite table.

La présente invention a également pour but de fournir un procédé appliqué à ce dispositif permettant de supprimer les inconvénients susmentionnés.

On atteint ce but de l'invention avec un procédé pour placer une pièce fortement bombée telle qu'une vitre panoramique de véhicule automobile dans une position prédéterminée appliqué à un dispositif conforme à l'une quelconque des revendications précédentes, remarquable en ce qu'il comprend les étapes consistant :
- à poser ladite pièce sur ladite table inclinée,
- à laisser ladite pièce glisser par rapport à ladite table jusqu'à ce qu'elle vienne s'appuyer contre lesdits moyens de réception,
- à déplacer ladite pièce sur ladite table avec lesdits moyens de déplacement en la faisant glisser sur lesdits moyens de réception jusqu'à ce qu'elle atteigne ladite position prédéterminée, et
- à immobiliser ladite pièce dans ladite position prédéterminée avec lesdits moyens d'immobilisation.

D'autres caractéristiques et avantages de la présente invention apparaîtront à la lecture de la description qui va suivre et à l'examen du dessin annexé, dans lequel :
- la figure 1 est une vue de dessus du dispositif selon l'invention, et
- la figure 2 est une vue en coupe selon le plan P de la figure 1 de ce dispositif.

Sur ces figures, des références identiques désignent des organes ou ensembles d'organes identiques ou analogues.

On se reporte à présent à ces figures, sur lesquelles on voit que le dispositif selon l'invention comprend une table 1 inclinée par rapport à l'horizontale sur laquelle sont montés des moyens de glissement comprenant un premier rouleau 3 monté pivotant et glissant sur un premier axe 5 sensiblement parallèle à la direction D de plus grande pente de la table 1, et des deuxième 7 et troisième 9 rouleaux montés pivotants et glissants respectivement sur des deuxième 11 et troisième 13 axes sensiblement perpendiculaires à la direction D.

Ces rouleaux 3, 7, 9 peuvent être formés par exemple dans une matière plastique.

Le dispositif selon l'invention comprend également des moyens de réception comprenant de préférence deux potences 15, 17 s'étendant dans des plans sensiblement perpendiculaires à la table 1, chacune de ces potences supportant des bras articulés 19, 21 aux extrémités desquels sont placés des moyens de roulement tels que des billes 23, 25 et 27, 29 montées rotatives sur ces bras.

Le dispositif selon l'invention comprend également des moyens de déplacement comprenant de préférence une pince 31 dont les deux mors 33, 35 sont articulés sur la table 1.

Le dispositif selon l'invention comprend encore des moyens d'immobilisation comprenant de préférence deux moyens de ventouse 37, 39 montés fixes sur les potences 15, 17.

De préférence, le dispositif selon l'invention comprend également des moyens de butée tels que des butoirs 41, 43 placés de part et d'autre des potences 15, 17.

De manière particulièrement préférée, les rouleaux 3, 7, 9, les potences 15, 17 et leurs bras associés 19, 21, la pince 31, les moyens de ventouse 37, 39 et les butoirs 41, 43 sont disposés symétriquement par rapport au plan P.

Le mode d'utilisation et les avantages du dispositif selon l'invention découlent directement de la description qui précède.

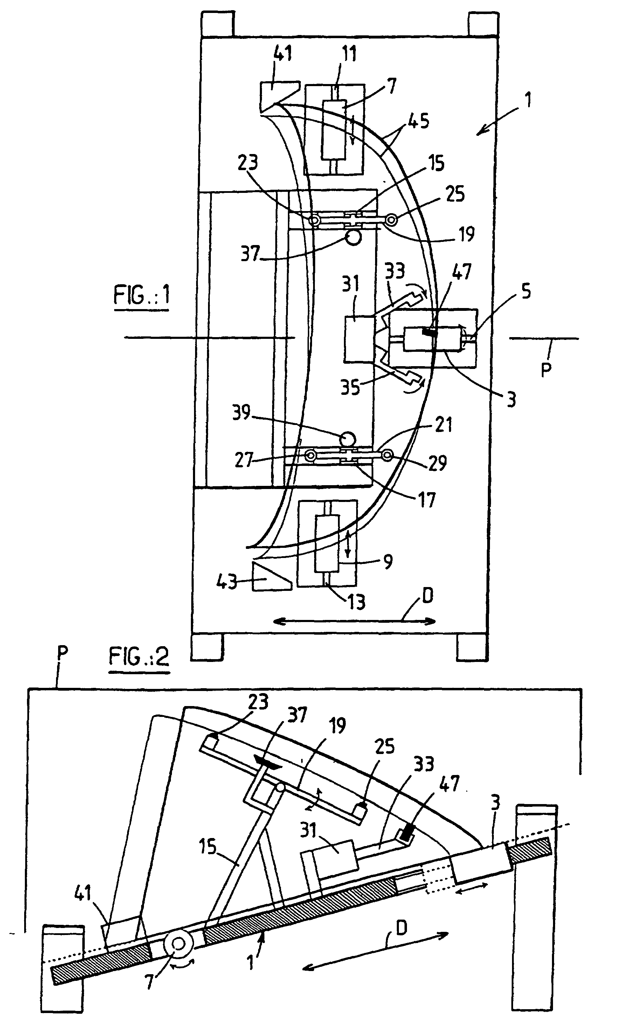

Lorsqu'on souhaite amener un pièce fortement bombée telle qu'une vitre panoramique 45 de véhicule automobile dans une position prédéterminée (cette position étant indiquée en trait fin sur les figures 1 et 2), on commence par déposer cette pièce sur les trois rouleaux 3, 7, 9.

Etant données d'une part l'inclinaison de la table 1 et d'autre part la possibilité de pivotement et de glissement des rouleaux 3, 7, 9, la pièce 45 glisse par rapport à la table 1 jusqu'à ce qu'elle vienne s'appuyer contre les billes 23, 25 et 27, 29 des bras 19 et 21.

Une fois que la pièce 45 a atteint cette position provisoire (indiquée en trait fort sur les figures 1 et 2), les mors 33, 35 de la pince 31 viennent en prise avec un pilote de centrage tel qu'un pion 47 placé dans une zone médiane de la pièce 45, déplaçant ainsi cette pièce latéralement, c'est-à-dire selon une direction sensiblement perpendiculaire à la direction D, jusqu'à ce qu'elle atteigne la position prédéterminée souhaitée.

Dans le mode de réalisation représenté, le dispositif selon l'invention et la pièce 45 sont symétriques par rapport au plan P, de sorte que la position prédéterminée susmentionnée est atteinte lorsque la pince 31 a amené le pion 47 dans ce plan P.

Il faut toutefois noter que l'on pourrait envisager d'autres modes de réalisation ne présentant pas les propriétés de symétrie susmentionnées, adaptés par exemple pour positionner des vitres panoramiques asymétriques.

Une fois que la pièce 45 a atteint la position prédéterminée souhaitée, on actionne les moyens de ventouse 37, 39, ce qui permet d'immobiliser cette pièce dans cette position en vue de sa préhension ultérieure par des moyens de montage tels qu'un robot (non représenté).

Pendant toutes ces opérations, les butoirs 41, 43 permettent d'éviter que la pièce 45 ne s'écarte trop par rapport à la position prédéterminée souhaitée, et ainsi d'éviter qu'elle ne quitte la table 1 et ne se brise.

Comme on peut le comprendre à présent, le dispositif selon l'invention permet d'amener avec une grande précision une pièce fortement bombée vers une position prédéterminée sans lui imposer de contraintes excessives.

En effet, la position prédéterminée est atteinte par des glissements successifs par rapport à la table 1 et par rapport aux bras 19 et 17, ces glissements étant facilités respectivement par les rouleaux 3, 7, 9 et par les billes 23, 25 et 21, 27.

Pendant ces glissements, la pièce 45 est mue d'une part par sa pesanteur, et d'autre part par un effort ponctuel et de faible intensité appliqué sur le pion 47 : aucune de ces forces ne produit un effet de pincement susceptible de déformer la pièce 45, contrairement à ce qui se passe dans les dispositifs de la technique antérieure.

Bien entendu, la, présente invention n'est pas limitée au mode de réalisation décrit et représenté, fourni à titre d'exemple illustratif et limitatif.

C'est ainsi que les moyens pour faire glisser la pièce 45 sur la table 1 pourraient comprendre un plateau se déplaçant sur coussin d'air par rapport à la table 1.

C'est ainsi également que le pilote de centrage pourrait consister en un trou formé dans la pièce 45, dans lequel viendrait s'engager un doigt pour déplacer latéralement cette pièce.

## Revendications

1. Dispositif pour placer une pièce fortement bombée (45) telle qu'une vitre panoramique de véhicule automobile dans une position prédéterminée, **caractérisé en ce qu'**il comprend une table (1) inclinée par rapport à l'horizontale comportant :
- des moyens (3, 7, 9) pour permettre à ladite pièce (45) de glisser parallèlement à ladite table (1),
- des moyens (15, 17, 19, 21, 23, 25, 27, 29) pour recevoir ladite pièce (45) lorsqu'elle descend le long de ladite table (1),
- des moyens (31) pour déplacer ladite pièce (45) sur ladite table (1) jusqu'à ladite position prédéterminée en la faisant glisser sur lesdits moyens de réception (15, 17, 19, 21, 23, 25, 27, 29), et
- des moyens (37, 39) pour immobiliser ladite pièce (45) dans ladite position prédéterminée.

2. Dispositif selon la revendication 1, **caractérisé en ce que** lesdits moyens de glissement comprennent un premier rouleau (3) monté pivotant et glissant sur un premier axe (5) sensiblement parallèle à la direction (D) de plus grande pente de ladite table (1) et des deuxième (7) et troisième (9) rouleaux montés pivotants et glissants respectivement sur des deuxième (11) et troisième (13) axes sensiblement perpendiculaires à ladite direction (D).

3. Dispositif selon l'une des revendications 1 ou 2, **caractérisé en ce que** lesdits moyens de réception comprennent deux potences (15, 17) s'étendant dans des plans sensiblement perpendiculaires à ladite table (1), chacune de ces potences supportant des moyens de roulement (23, 25 et 27, 29) destinés à coopérer avec ladite pièce (45).

4. Dispositif selon la revendication 3, **caractérisé en ce qu'**il comprend des bras (19, 21) articulés sur lesdites potences (15, 17) et **en ce que** lesdits moyens de roulement comprennent des billes (23, 25 et 27, 29) montées rotatives aux extrémités desdits bras (19, 21).

5. Dispositif selon l'une quelconque des revendications précédentes, **caractérisé en ce que** lesdits moyens de déplacement comprennent une pince (31) articulée sur ladite table (1).

6. Dispositif selon l'une quelconque des revendications précédentes, **caractérisé en ce que** lesdits moyens d'immobilisation comprennent deux moyens de ventouse (37, 39) fixes par rapport à ladite table (1).

7. Dispositif selon la revendication 6 lorsqu'elle dépend de la revendication 3, **caractérisé en ce que** lesdits moyens de ventouse (37, 39) sont montés sur lesdites potences (15, 17).

8. Dispositif selon l'une quelconque des revendications précédentes, **caractérisé en ce qu'**il comprend des moyens (41, 43) pour empêcher les écarts trop importants de ladite pièce (45) par rapport à ladite position prédéterminée.

9. Dispositif selon la revendication 8, **caractérisé en ce que** lesdits moyens d'empêchement comprennent des butoirs (41, 43) placés de part et d'autre desdits moyens de réception (15, 17, 19, 21, 23, 25, 27, 29).

10. Dispositif selon l'une quelconque des revendications précédentes, **caractérisé en ce que** lesdits moyens de glissement (3, 7, 9), de réception (15, 17, 19, 21, 23, 25, 27, 29), de déplacement (31) et d'immobilisation (37, 39) sont disposés symétriquement par rapport à un plan (P) perpendiculaire à ladite table (1) et parallèle à sa direction (D) de plus grande pente.

11. Procédé pour placer une pièce fortement bombée (45) telle qu'une vitre panoramique de véhicule automobile dans une position prédéterminée appliqué à un dispositif conforme à l'une quelconque des revendications précédentes, **caractérisé en ce qu'**il comprend les étapes consistant :
- à poser ladite pièce (45) sur ladite table inclinée (1),
- à laisser ladite pièce (45) glisser par rapport à ladite table (1) jusqu'à ce qu'elle vienne s'appuyer contre lesdits moyens de réception (15, 17, 19, 21, 23, 25, 27, 29),
- à déplacer ladite pièce (45) sur ladite table (1) avec lesdits moyens de déplacement (31) en la faisant glisser sur lesdits moyens de réception (15, 17, 19, 21, 23, 25, 27, 29) jusqu'à ce qu'elle atteigne ladite position prédéterminée, et
- à immobiliser ladite pièce (45) dans ladite position prédéterminée avec lesdits moyens d'immobilisation (37, 39).

12. Procédé selon la revendication 11, **caractérisé en ce qu'**il comprend l'étape préalable consistant à placer un pilote de centrage tel qu'un pion (47) ou un trou sur ladite pièce (45).

## Patentansprüche

1. Vorrichtung zum Verbringen eines stark ausgebauchten Werkstücks wie etwa einer Panoramafensterscheibe für ein Kraftfahrzeug in eine vorbestimmte Stellung, **dadurch gekennzeichnet, dass** sie einen Tisch (1) umfasst, der bezüglich der Horizontalen geneigt ist, und der umfasst:
- Mittel (3, 7, 9) zum Ermöglichen, dass das Werkstück (45) parallel zu dem Tisch (1) gleitet,
- Mittel (15, 17, 19, 21, 23, 25, 27, 29) zum Aufnehmen des Werkstücks (45), wenn es längst des Tisches (1) herunterkommt,
- Mittel (31) zum Verschieben des Werkstücks (45) auf dem Tisch (1) bis in die vorbestimmte Stellung, indem man es auf den Aufnahmemitteln (15, 17, 19, 21, 23, 25, 27, 29) gleiten lässt, und
- Mittel (37 und 39) zum Festhalten des Werkstücks (45) in der vorbestimmten Stellung.

2. Vorrichtung nach Anspruch 1, **dadurch gekennzeichnet, dass** die Mittel zum Gleiten eine erste Walze (3), welche auf einer ersten Achse (5), die im Wesentlichen parallel zur Richtung (D) der größten Neigung des Tischs (1) ist, schwenkbar und gleitend befestigt ist, und zweite (7) und dritte (9) Walzen aufweist, welche schwenkbar und gleitend auf zweiten (11) bzw. dritten (13) Achsen befestigt sind, welche im Wesentlichen senkrecht zu der Richtung (D) liegen.

3. Vorrichtung nach einem der Ansprüche 1 oder 2, **dadurch gekennzeichnet, dass** die Aufnahmemittel zwei Träger (15, 17) umfassen, die sich in Ebenen im Wesentlichen senkrecht zu dem Tisch (1) erstrecken, wobei jeder dieser Träger Mittel zum Rollen (23, 25 und 27, 29) trägt, die dazu bestimmt sind, mit dem Werkstück (45) zusammenzuwirken.

4. Vorrichtung nach Anspruch 3, **dadurch gekennzeichnet, dass** sie Arme (19, 21) umfasst, die auf den Trägern (15, 17) angelenkt sind, und dass die Rollmittel Kugeln (23, 25 und 27, 29) umfassen, welche an den Enden der Arme (19,21) angebracht sind.

5. Vorrichtung nach einem der vorhergehenden Ansprüche, **dadurch gekennzeichnet, dass** die Mittel zum Verschieben eine auf dem Tisch (1) gelenkig befestigte Klemme (3 1 ) umfassen.

6. Vorrichtung nach einem der vorhergehenden Ansprüche, **dadurch gekennzeichnet, dass** die Mittel zum Festhalten zwei Saugnapfinittel (37, 39) umfassen, die bezogen auf den Tisch (1) fest sind.

7. Vorrichtung nach Anspruch 6 in seinem Rückbezug auf Anspruch 3, **dadurch gekennzeichnet, dass** die Saugnapfmittel (37, 39) auf den Trägem (15, 17) angebracht sind.

8. Vorrichtung nach einem der vorhergehenden Ansprüche, dass sich **gekennzeichnet, dass** sie Mittel (41, 43) umfasst, um zu starke Beabstandungen des Werkstücks (45) bezogen auf die vorher bestimmte Stellung zu verhindern.

9. Vorrichtung nach Anspruch 8, **dadurch gekennzeichnet, dass** die Mittel zum Verhindern Stopper (41, 43) umfassen, die beiderseits der Aufnahmemittel (15, 17, 19, 21, 23, 25, 27, 29) angeordnet sind.

10. Vorrichtung nach einem der vorhergehenden Ansprüche, **dadurch gekennzeichnet, dass** die Mittel zum Gleiten (3, 7, 9), zum Aufnehmen (15, 17, 19, 21, 23, 25, 27, 29), zum Verschieben (31) und zum Festhalten (37, 39) symmetrisch bezogen einer Ebene (P) angeordnet sind, welche senkrecht zu dem Tisch (1) verläuft und parallel zu dessen Richtung (D) der größten Neigung.

11. Verfahren zum Verbringen eines stark ausgebauchten Werkstücks (45) wie etwa einer Panoramafensterscheibe für ein Kraftfahrzeug in eine vorbestimmte Stellung, das an einer Vorrichtung gemäß einem der vorhergehenden Ansprüche durchgeführt wird, **dadurch gekennzeichnet, dass** es die Schritte umfasst, die bestehen aus:
- dem Legen des Werkstücks (45) auf den geneigten Tisch (1),
- dem Gleitenlassen des Werkstücks (45) bezogen auf den Tisch (1), bis es sich gegen die Aufnahmemittel (15, 17, 19, 21, 23, 25, 27, 29) abstützt,
- dem Verschieben des Werkstücks (45) auf dem Tisch (1) mit den Mitteln zum Verschieben (31), indem man es auf den Aufnahmemitteln (15, 17, 19, 21, 23, 25, 27, 29) gleiten lässt, bis es die vorher bestimmte Stellung erreicht, und
- dem Festhalten des Werkstücks (45) in der vorher bestimmten Stellung mit den Festhaltemitteln (37, 39).

12. Verfahren nach Anspruch 11, **dadurch gekennzeichnet, dass** es den vorhergehenden Schritt umfasst, dass man eine Zentrierführung wie etwa einen Stift (47) oder ein Loch auf dem Werkstück (45) anbringt.

## Claims

1. Device for placing a highly curved component (45) such as a panoramic motor vehicle window in a predetermined position, **characterized in that** it comprises a table (1) inclined relative to the horizontal comprising:
- means (3, 7, 9) of allowing said component (45) to slide parallel to said table (1),
- means (15, 17, 19, 21, 23, 25, 27, 29) of receiving said component (45) when it moves down along said table (1),
- means (31) of moving said component (45) on said table (1) to said predetermined position by sliding it on said receiving means (15, 17, 19, 21, 23, 25, 27, 29), and
- means (37, 39) of immobilizing said component (45) in said predetermined position.

2. Device according to claim 1, **characterized in that** said sliding means comprise a first roller (3) pivotably and slidably mounted on a first shaft (5) approximately parallel to the direction of greatest slope (D) of the table (1) and second (7) and third (9) rollers pivotably and slidably mounted respectively on second (11) and third (13) shafts approximately perpendicular to said direction (D).

3. Device according to one of claims 1 or 2, **characterized in that** said receiving means comprise two brackets (15, 17) extending in planes approximately perpendicular to said table (1), each of these brackets supporting rolling means (23, 25 and 27, 29) designed to cooperate with said component (45).

4. Device according to claim 3, **characterized in that** it comprises arms (19, 21) hinged on said brackets (15, 17) and **in that** said rolling means comprise balls (23, 25 and 27, 29) rotatably mounted at the ends of said arms (19, 21).

5. Device according to any one of the previous claims, **characterized in that** said displacement means comprise a clamp (31) hinged on said table (1).

6. Device according to any one of the previous claims, **characterized in that** said immobilization means comprise two suction means (37, 39) fixed relative to said table (1).

7. Device according to claim 6 when it is dependent on claim 3, **characterized in that** said suction means (37, 39) are mounted on said brackets (15, 17).

8. Device according to any one of the previous claims, **characterized in that** it comprises means (41, 43) of preventing excessive deviation of said component (45) relative to said predetermined position.

9. Device according to claim 8, **characterized in that** said prevention means comprise stoppers (41, 43) placed on either side of said receiving means (15, 17, 19, 21, 23, 25, 27, 29).

10. Device according to any one of the previous claims, **characterized in that** said sliding 3, 7, 9), receiving (15, 17, 19, 21, 23, 25, 27, 29), displacement (31) and immobilization (37, 39) means are arranged symmetrically relative to a plane (P) perpendicular to said table (1) and parallel to its direction of greatest slope (D).

11. Method for placing a highly curved component (45) such as a panoramic motor vehicle window in a predetermined position applied to a device according to any one of the previous claims, **characterized in that** it comprises the stages consisting of:
- placing said component (45) on said inclined table (1),
- allowing said component (45) to slide relative to said table (1) until it rests against said receiving means (15, 17, 19, 21, 23, 15, 27, 29),
- moving said component (45) on said table (1) with said displacement means (31) by sliding it on said receiving means (15, 17, 19, 21, 23, 25, 27, 29) until it reaches said predetermined position, and
- immobilizing said component (45) in said predetermined position with said immobilization means (37, 39).

12. Method according to claim 11, **characterized in that** it comprises the previous stage consisting of placing a centering guide such as a slug (47) or a hole on said component (45).
